(19) **Europäisches Patentamt**

**European Patent Office**

**Office européen des brevets**

(11) **EP 0 969 309 B1**

(12) **EUROPÄISCHE PATENTSCHRIFT**

(45) Veröffentlichungstag und Bekanntmachung des Hinweises auf die Patenterteilung:
**18.09.2002  Patentblatt 2002/38**

(51) Int Cl.⁷: **G02C 7/02**

(21) Anmeldenummer: **99118534.9**

(22) Anmeldetag: **30.03.1995**

(54) **Serie progressiver Brillengläser**

Set of progressive spectacle lenses

Série de lentilles de lunettes progressives

(84) Benannte Vertragsstaaten:
**AT CH DE ES FR GB IT LI NL SE**

(30) Priorität: **30.03.1994  DE 4411157**
**29.10.1994  DE 4438506**

(43) Veröffentlichungstag der Anmeldung:
**05.01.2000  Patentblatt 2000/01**

(62) Dokumentnummer(n) der früheren Anmeldung(en) nach Art. 76 EPÜ:
**95913876.9 / 0 701 709**

(73) Patentinhaber: **Optische Werke G. Rodenstock**
**80469 München (DE)**

(72) Erfinder:
- **Altheimer, Helmut**
  **87650 Lauchdorf (DE)**
- **Awrath, Norbert**
  **81539 München (DE)**
- **Barth, Rudolf**
  **85256 Vierkirchen (DE)**
- **Baumbach,Peter**
  **81543 München (DE)**

- **Brosig, Jochen**
  **82031 Grünwald (DE)**
- **Esser, Gregor**
  **85540 Haar (DE)**
- **Füss, Monika**
  **80337 München (DE)**
- **Guilino, Günther**
  **81476 München (DE)**
- **Haimerl, Walter**
  **80337 München (DE)**
- **Meixner, Christine**
  **80634 München (DE)**
- **Pfeiffer, Herbert**
  **81247 München (DE)**
- **Rohrbach, Manfred**
  **85241 Hebertshausen (DE)**

(74) Vertreter: **Münich, Wilhelm, Dr.**
**Dr. Münich & Kollegen**
**Anwaltskanzlei**
**Wilhelm-Mayr-Strasse 11**
**80689 München (DE)**

(56) Entgegenhaltungen:
**EP-A- 0 039 497**       **WO-A-85/02689**
**WO-A-91/01508**        **US-A- 3 910 691**

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

## Technisches Gebiet

Die Erfindung bezieht sich auf eine Serie progressiver Brillengläser gemäß dem Oberbegriff des Patentanspruchs 1.

## Stand der Technik

Brillengläser der im Oberbegriff des Patentanspruchs 1 vorausgesetzten Art weisen (in der Regel) eine Vorderfläche mit kontinuierlich variierendem Flächenbrechwert (progressive Fläche) auf, der von dem jeweiligen zum Sehen in die Ferne geeigneten Wert BK [dpt] im Punkt mit den (im Rahmen dieser Anmeldung gewählten) Koordinaten x=0mm, y=8mm (Fernbezugspunkt) im·unteren Bereich des Fernteils längs einer gewundenen Linie (Hauptlinie), die in etwa mit der Hauptblicklinie bei Blicksenkung, d.h. dem Durchstoßpunkt des Sehstrahls bei Blicksenkung durch die Fläche mit kontiniuerlich variierendem Brechwert, zusammenfällt, auf einen zum Sehen in die Nähe geeigneten Wert im oberen Bereich des Nahteils ansteigt, der - im Nahbezugspunkt - um den Wert Add [dpt] der Addition höher als der Flächenbrechwert BK im unteren Bereich des Fernteils ist. Die augenseitige Fläche ist sphärisch oder asphärisch bzw. bei astigmatischer Verordnung torisch oder atorisch gestaltet.

Die Hersteller von progressiven Brillengläsern müssen derartige progressive Brillengläser mit unterschiedlichem Flächenbrechwert im Fernbezugspunkt und/oder unterschiedliche Zunahmen des Flächenbrechwerts vom Fernteil zum Nahteil (i.f. als Addition Add bezeichnet) fertigen, um den unterschiedlichen Fehlsichtigkeiten bzw. den unterschiedlichen Graden der Alterssichtigkeit gerecht zu werden. Aufgrund unterschiedlicher Materialien (Silikatglas mit einem Brechungsindex von 1,525, hochbrechendes Silikatglas mit einem Brechungsindex von z.B. 1,6 oder 1,7 sowie Kunststoff) und einer Vielzahl von Basiskurven und Additionen (in der Regel von 0,5 dpt bis 3,5 oder 4 dpt in Abstufungen von typischerweise 0,25 dpt) ist es für ein "komplettes Programm" nötig, typischerweise wenigstens 100, in der Regel jedoch weit mehr, verschiedene Flächen zu berechnen und zu fertigen.

In der Vergangenheit sind derartige Brillengläser mit unterschiedlichem Flächenbrechwert im Fernteil und/oder unterschiedlicher Zunahme des Flächenbrechwerts vom Fernteil zum Nahteil dadurch berechnet worden, daß zunächst eine progressive Fläche mit einem bestimmten Flächenbrechwert und einer bestimmten Addition - auch als Nahzusatz bezeichnet - berechnet worden ist. Aus dieser Fläche sind dann durch ein Transformationsverfahren die weiteren für die Serie benötigten Flächen mit abweichender Addition bzw. abweichendem Flächenbrechwert abgeleitet worden. Hierzu wird u.a. auf die US-PS 2 878 721 verwiesen, in der dies ausdrücklich erwähnt ist. Auf diese Druckschrift sowie die DE-A-28 14 936 wird im übrigen zur Erläuterung aller hier nicht im einzelnen definierten Begriffe, wie Flächenbrechwert und Flächenastigmatismus ausdrücklich Bezug genommen.

Seit einiger Zeit werden progressive Flächen für jede Flächenbrechkraft im Fernbezugspunkt und jede Addition gesondert - beispielsweise mittels Splines - berechnet, also nicht durch Transformations-Verfahren aus einer sogenannten Mutterfläche abgeleitet.

Bei diesen Berechnungsverfahren wird oft mit "Zielfunktionen" gearbeitet, bei denen Flächeneigenschaften unter physiologischen Gesichtspunkten vorgegeben werden. Damit ist für die Berechnung die "vernünftige" Vorgabe von Flächeneigenschaften von entscheidender Bedeutung.

Erfindungsgemäß ist erkannt worden, daß durch zu weitgehende Forderungen beispielsweise bezüglich der Größe des Fernteils die Optimierung von anderen Flächeneigenschaften erschwert, wenn nicht sogar unmöglich gemacht wird. Für eine schnelle und wirtschaftliche Berechnung einer Vielzahl von progressiven Flächen ist also die Vorgabe von Flächeneigenschaften als Funktion der Basiskurve (Flächenbrechwert BK im Fernteil) und/oder der Addition von entscheidener Bedeutung.

## Darstellung der Erfindung

Der Erfindung liegt die Aufgabe zugrunde, Bemessungsregeln für eine physiologisch wesentliche Größe bei einem progressiven Brillenglas, nämlich den Versatz der Hauptlinie, durch den diese dem Durchstoßpunkt des Sehstrahls durch die progressive Fläche bei einer Blicksenkung folgt, anzugeben, durch die diese Größen als Funktion des Brechwerts im Fernteil und/oder der Addition zumindest als Grenzwerte angegeben werden, so daß die Berechnung der einzelnen Flächen ohne großen Aufwand und ohne eine Änderung der "Zielfunktionen" möglich ist.

Eine erfindungsgemäße Lösung dieser Aufgabe ist in Anspruch 1 angegeben. Weiterbildungen der Erfindung sind Gegenstand der abhängigen Ansprüche.

Für die maximale Höhe y (in mm) der Linie, auf der der Flächenastigmatismus 0,5 dpt beträgt, und die damit den für deutliches Sehen geeigneten Bereich des Fernteils nach unten begrenzt, gilt beidseits in einem Abstand von 25 mm von der Hauptlinie:

$$y = f(Add,BK) = b(BK) + a/ (Add*1000)$$

$$b (BK) = a_0 + a_1 *BK + a_2 *BK^2$$

Dabei sind die Koeffizienten auf der nasalen und der temporalen Seite der Hauptlinie wie folgt festgelegt:

|  | nasal | temporal |
|---|---|---|
| a | $-8,5 \pm 20\%$ | $-7,5 \pm 20\%$ |
| $a_0$ | 18 ... 19 mm | 19 ... 20 mm |
| $a_1$ | $-3580 \pm 20\%$ mm$^2$ | $-4520 \pm 20\%$ mm$^2$ |
| $a_2$ | $390\,000 \pm 20\%$ mm$^3$ | $480\,000 \pm 20\%$ mm$^3$. |

In dem Bereich des Fernteils, der für deutliches Sehen geeignet ist, muß nämlich der Astigmatismus, der im unteren Bereich des Fernteils im wesentlichen durch den Flächenastigmatismus bestimmt wird, kleiner als 0,5 dpt sein, da ansonsten der Visus zu stark vermindert würde.

Bei bekannten Brillengläser der im Oberbegriff des Patentanspruchs 1 vorausgesetzten Art werden - um die Optimierung anderer Größen, wie die Breite des Nahteils und/oder die Breite der Progressionszone zu erleichtern - Kompromisse hinsichtlich der Begrenzung des Fernteils im seitlichen unteren Bereich eingegangen, die - wie erfindungsgemäß erkannt worden ist - häufig für den Brillenträger die Komforteigenschaften des jeweiligen progressiven Brillenglases bestimmt, nicht erforderlich sind: Es hat sich nämlich herausgestellt, daß es möglich ist, die "0,5 dpt-Linie" des Flächenastigmatismus im seitlichen unteren Bereich des Fernteils "flacher" als beim Stand der Technik verlaufen zu lassen, ohne daß bei anderen Größen, wie der Breite der Progressionszone oder der Breite des Nahteils Kompromisse eingegangen werden zu müssen. Durch die oben angegebene Bemessungsregel erhält man eine Bemessung der maximalen Fernteilgröße in der Regel über den gesamten, in jedem Falle jedoch über den normalen Wirkungs- und Additionsbereich, durch die "gerade noch nicht" Verschlechterungen der Glaseigenschaften in anderen Bereichen hervorgerufen werden. Unter normalem Wirkungsbereich wird der Bereich mit nicht zu großen Pluswirkungen verstanden.

Unter einer Serie von progressiven Brillengläsern wird im Rahmen der vorliegenden Erfindung ein Satz von wenigstens zwei progressiven Brillengläsern verstanden, die sich hinsichtlich ihres Brechwerts im Fernbezugspunkt und/oder ihrer Addition (Nahzusatz) unterscheiden. In der Regel weisen die progressiven Flächen der Brillengläser eines Satzes eine "topologische Ähnlichkeit" auf, das Bestehen einer topologischen Ähnlichkeit ist zwar eine bevorzugte Eigenschaft eines Satzes, jedoch keine unbedingte Notwendigkeit, damit wenigstens zwei Brillengläser einen "Satz" im Sinne dieser Erfindung bilden.

Bei einer bevorzugten Weiterbildung sind die Toleranzen für die Koeffizienten a, $a_1$ und $a_2$ auf $\pm 5\%$ eingeschränkt. Ferner kann der Koeffizient $a_0$ auf der nasalen Seite der Wert 18 und auf der temporalen Seite den Wert 19,3 haben.

Diese Wahl der Koeffizienten erlaubt eine verfeinerte Optimierung der progressiven Flächen mit unterschiedlicher Basiskurve und/oder Addition.

Eine weitere Ausführung kennzeichnet eine Lösung, bei der die minimal bei der Optimierung erreichbare Breite dx des Nahteils in der Höhe des Nahbezugspunktes nur eine Funktion der Addition Add und überraschenderweise nicht des Flächenbrechwerts BK im Fernbezugspunkt ist. Dabei wird in Übereinstimmung mit den vorstehenden Darlegungen davon ausgegangen, daß der Nahteil durch die 0,5 dpt-Linie des Flächenastigmatismus der progressiven Fläche begrenzt ist.

Die Breite des Nahteils ist fast genauso wie die Größe des Fernteils eine bestimmende Größe für die Akzeptanz eines progressiven Brillenglases bei dem jeweiligen Benutzer. Ein breiter Nahteil ermöglicht es beispielsweise, mehrere Spalten einer Zeitung ohne Kopfbewegung zu überblicken.

Insbesondere gilt für die minimale Breite dx des Nahteils "in Höhe des Nahbezugspunktes":

$$dx = b' + a'/(Add*1000)$$

mit

a' = $14,6 \pm 20\%$
b' = 5..7 mm

Dabei wird unter Nahbezugspunkt in Übereinstimmung mit der üblichen Definition der Punkt auf der Hauptlinie verstanden, in dem der Flächenbrechwert derprogressiven Fläche den Wert (BK + Add) erreicht.

Bevorzugt für die Gestaltung der progressiven Fläche und insbesondere die Ausbildung des Nahteils ist es, wenn die Toleranz für den Koeffizienten a' $\pm$ 5% ist, und der Koeffizient b' den Wert 6 mm hat (Anspruch 6).

Bei der Realisierung der Erfindung, die im Patentanspruch 1 angegeben ist, gilt für den Versatz $x_0$ der Projektion der Hauptlinie in die x,y-Ebene:

$$x_0 = b'' + a'' - a''/(1 + e^{c*(y+d)})$$

Dabei gilt für die Koeffizienten:

$$2 \leq a'' \leq 4,3 \text{ mm}$$
$$-0,03 \leq b'' \leq 0 \text{ mm}$$
$$-0,4 \leq c \leq -0,3 \text{ mm}^{-1}$$
$$4,5 \leq d \leq 5,1 \text{ mm}$$

Nach Anspruch 2 ist der Koeffizient a'' eine Funktion der Addition Add und des Flächenbrechwerts BK im Fernbezugspunkt.

Im Anspruch 3 ist angegeben, daß für den Koeffizienten a'' in der im Anspruch 1 angegebenen Beziehung gilt:

$$a'' = \alpha * ADD + \beta * BK + \Gamma$$

wobei für die Koeffizienten der im Anspruch 3 angegebenen Beziehung gilt:

$$100 \leq \beta \leq 300 \text{ mm}^2$$

Add $\leq$ 2,5 dpt

$$0 \leq \alpha \leq 200 \text{ mm}^2$$

$$1,3 \leq \Gamma \leq 2 \text{ mm}$$

Add > 2,5 dpt

$$800 \leq \alpha \leq 1100 \text{ mm}^2$$

$$0,7 \leq \Gamma \leq 0 \text{ mm}$$

Bei der erfindungsgemäßen Serie von Brillengläsern kann die Hauptlinie eine Linie mit einem - wenn auch geringem - Flächenastigmatismus sein. Bevorzugt ist es jedoch, wenn die Hauptlinie keinen Flächenastigmatismus aufweist (Anspruch 4). Erfindungsgemäß ist nämlich erkannt worden, daß es im Gegensatz zu der Lehre der DE 30 16 935 C2 möglich ist, ein progressives Brillenglas mit großem Fernteil und großem Nachteil sowie einer breiten Progressionszone auch und sogar insbesondere dann zu realisieren, wenn die Hauptlinie (wenigstens) im Bereich -18mm < y $\leq$ 12mm eine sogenannte Nabellinie ist.

Weiterhin ist es erfindungsgemäß bevorzugt, wenn die Linien gleichen Flächenbrechwerts - anders als beim Stand der Technik - horizontal in die Hauptlinie einmünden. Hierdurch werden bei einer horizontalen Blickbewegung Schaukelerscheinungen etc. für den Brillenträger mit Sicherheit vermieden. Die horizontale Einmündung der Linien gleichen Flächenbrechwerts in die Hauptlinie erhält man durch die Vorgabe eines infinitesimalen Streifens höherer Ordnung beidseits der Hauptlinie; hierzu wird auf die DE-A-43 37 369 und insbesondere die dort gemachten Darlegungen zum Rechenverfahren verwiesen.

Als Folge der horizontalen Einmündung der Linien gleichen Flächenbrechwerts erhält man einen charkteristischen Verlauf der Horizontalradien-Differenz. Unter Horizontalradius wird der Radiuswert verstanden, den man durch den Schnitt der progressiven Fläche mit einer Horizontalebene y=const. erhält. Unter Horizontalradien-Differenz wird nun die Differenz des Horizontalradius auf der Hauptlinie im Punkt x=$x_0$, y=$y_0$ und dem Horizontalradius in einem Punkt

$x=x_1$, $y=y_0$ der progressiven Fläche verstanden.

Durch die erfindungsgemäß erzwungene horizontale Einmündung der Linien gleichen Flächenbrechwerts ändert sich die Horizontalradien-Differenz im unteren Bereich des Fernteils, d.h. für y-Werte von 5 bis 10 mm in einem Streifen beidseits der Hauptlinie mit einer einseitigen Ausdehnung von etwa 3 bis 8 mm mit einem vergleichsweise großen Gradienten, während die Änderung außerhalb dieses Streifens einen wesentlich kleineren Gradienten aufweist. In der Progressionszone und im Nahteil ist dagegen in diesem Streifen beidseits der Hauptlinie der Gradient der Horizontalradien-Differenz vergleichsweise gering.

Bei progressiven Brillengläsern der im Oberbegriff des Patentanspruchs 1 vorausgesetzten Art ist die progressive Fläche, d.h. die Fläche mit sich kontinuierlich änderndem Flächenbrechwert, in der Regel, jedoch nicht notwendigerweise, die Vorderfläche.

Erfindungsgemäß ist nun erkannt worden, daß sich durch die Gestaltung der zweiten Fläche, die - entsprechend den vorstehenden Darlegungen - in der Regel die augenseitige Fläche ist - und insbesondere durch die Verwendung asphärischer augenseitiger Flächen wesentliche "kosmetische Vorteile" erzielen lassen:

Wählt man als augenseitige Fläche bei sphärischer Verordnung eine asphärische Fläche und bei torischer Verordnung eine atorische Fläche, so kann man die Basiskurve der progressiven Fläche, d.h. den Flächenbrechwert im Fernbezugspunkt 1 dpt bis 1,5 dpt "flacher" als bei sphärischer bzw. torischer augenseitiger Fläche wählen. Normalerweise würde man bei einer flacheren Basiskurve eine deutliche Verringerung des Visus und insbesondere eine wesentliche Einschränkung des für "deutliches Sehen" geeigneten Bereichs erhalten. Tatsächlich kann man jedoch durch die erfindungsgemäße Wahl aspärischer Flächen bei "flacherer Basiskurve" eine Ausweitung des für deutliches Sehen geeigneten Bereichs erhalten.

Dabei ist es bevorzugt, wenn das Design der atorischen Fläche in Abhängigkeit von der Achslage des Zylinders variiert. Dabei wird unter atorischer Fläche eine Fläche verstanden, die wenigstens einen asphärischen, also von der Kreisform abweichenden Hauptschnitt aufweist. Im Anspruch 14 ist gekennzeichnet, daß die Abweichung dz zwischen der Pfeilhöhe des oder der asphärischen Schnitte und eines Kreises mit einem Radius, der dem Scheitelradius der Asphäre entspricht, gegeben ist durch:

$$dz = a_j * r^2 + b_j * r^4$$

hierbei bedeuten

dz    die Abweichung in μm zwischen Scheitelkreis und Hauptschnitt
r    der Abstand vom Scheitel in mm, d.h. $r = (x^2+y^2)^{0,5}$

und daß für die Koeffizienten gilt:

$$|a_j| \leq 2 * 10^{-4}\ mm^{-1}$$

$$|b_j| \leq 1 * 10^{-6}\ mm^{-3}$$

wobei der Hauptschnitt mit der geringeren Scheitelkrümmung mit j=1 und der mit der größeren Scheitelkrümmung mit j=2 bezeichnet ist. Dabei können die Koeffizienten $a_j$ und $b_j$ durch folgende Funktionale gegeben sein:

$$a_j = f_{j1}(s,z) = a_{j1}(s) + b_{j1}(s) * zyl$$

$$b_j = f_{j2}(s,z) = a_{j2}(s) + b_{j2}(s) * zyl$$

hierbei bedeuten

s    die sphärische Wirkung im Fernbezugspunkt
zyl    die zylindrische Wirkung im Fernbezugspunkt in Minuszylinder-Schreibweise, und

daß die Koeffizienten $a_{j2}$ und $b_{j2}$ eine Funktion zweiter Ordnung von s sind.

Für die Koeffizienten $a_{ji}$ und $b_{ji}$ kann wiederum gelten:

$$|a_{j1}| \leq 5 * 10^{-5} \text{ mm}^{-1}$$

$$|b_{j1}| \leq 5 * 10^{-2}$$

$$|a_{j2}| \leq 4 * 10^{-7} \text{ mm}^{-3}$$

$$|b_{j2}| \leq 3 * 10^{-4} \text{ mm}^{-2}$$

Die Koeffizienten $a_{j2}$ und $b_{j2}$ können durch folgende Funktionale gegeben sein:

$$a_{j2} = a_{j21} + b_{j21} * s + c_{j21} * s^2$$

$$b_{j2} = a_{j22} + b_{j22} * s + c_{j22} * s^2$$

wobei für die Koeffizienten a, b und c gelten kann:

$$a_{j21} = 2{,}35 * 10^{-8} \text{ mm}^{-3} \pm 50 \text{ \%}$$

$$b_{j21} = -1{,}7 * 10^{-5} \text{ mm}^{-2} \pm 50 \text{ \%}$$

$$c_{j21} = -8 * 10^{-3} \text{ mm}^{-1} \pm 50 \text{ \%}$$

Im Anspruch 14 sind Koeffizienten für die beiden Hauptschnitte angegeben, die in sehr einfacher Weise die Berechnung einer atorischen Rückfläche zu einer progressiven Vorderfläche gestatten.

$$a_{121} = 2{,}35 * 10^{-8} \text{ mm}^{-3} \pm 50 \text{ \%}$$

$$b_{j21} = -1{,}7 * 10^{-5} \text{ mm}^{-2} \pm 50 \text{ \%}$$

$$c_{j21} = -8 * 10^{-3} \text{ mm}^{-1} \pm 50 \text{ \%}$$

$$a_{122} = 1{,}73 * 10^{-5} \text{ mm}^{-2} \pm 50 \text{ \%}$$

$$b_{122} = 3{,}22 * 10^{-2} \text{ mm}^{-1} \pm 50 \text{ \%}$$

$$c_{122} = -2{,}27 \pm 50 \text{ \%}$$

$$a_{222} = -2{,}76 * 10^{-5} \text{ mm}^{-2} \pm 50 \text{ \%}$$

$$b_{222} = -1{,}29 * 10^{-3} \text{ mm}^{-1} \pm 50 \%$$

$$c_{222} = -0{,}172 \pm 50 \%$$

## Kurze Beschreibung der Zeichnung

Die Erfindung wird nachstehend an Hand von Ausführungsbeispielen unter Bezugnahme auf die Zeichnung näher beschrieben, in der zeigen:

Fig. 1a bis 1c      die Linien gleichen Flächenastigmatismus für Brillengläser mit dem Flächenbrechwert 4 dpt im Fernbezugspunkt und unterschiedlicher Addition (ldpt bis 3 dpt),

Fig. 2a bis 2c      die Linien gleichen Flächenastigmatismus für Brillengläser mit dem Flächenbrechwert 5 dpt im Fernbezugspunkt und unterschiedlicher Addition,

Fig. 3a bis 3c      die Linien gleichen Flächenastigmatismus für Brillengläser mit dem Flächenbrechwert 6,5 dpt im Fernbezugspunkt und unterschiedlicher Addition,

Fig. 4a      die Projektion der Hauptlinie in die x,y-Ebene für Hauptlinien mit unterschiedlicher Addition und einem Flächenbrechwert 5dpt im Fernbezugspunkt zur Erläuterung des sog. $x_0$-Versatzes,

Fig. 4b      den mittleren Flächenbrechwert für diese Hauptlinien,

Fig. 4c      den Winkel $\delta_0(y)$, d.h. die Steigung der Horizontalschnitte an diesen Hauptlinien,

Fig. 5      die Horizontalradiendifferenz für ein Brillenglas mit der Basiskurve 5 und der Addition 2 für verschiedene Werte von y,

Fig. 6a bis 6d      die Abweichungen von atorischen Flächen von entsprechenden torischen Flächen, und

Fig. 7a und 7b      die Iso-Visus-Linien für ein progressives Brillenglas mit atorischer augenseitiger Fläche bzw. torischer augenseitiger Fläche.

## Darstellung von Ausführungsbeispielen

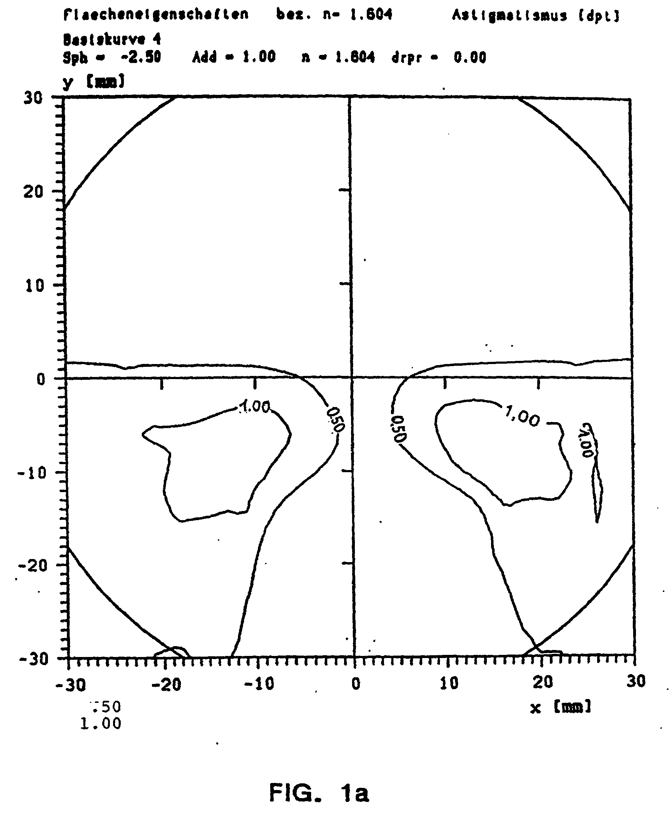

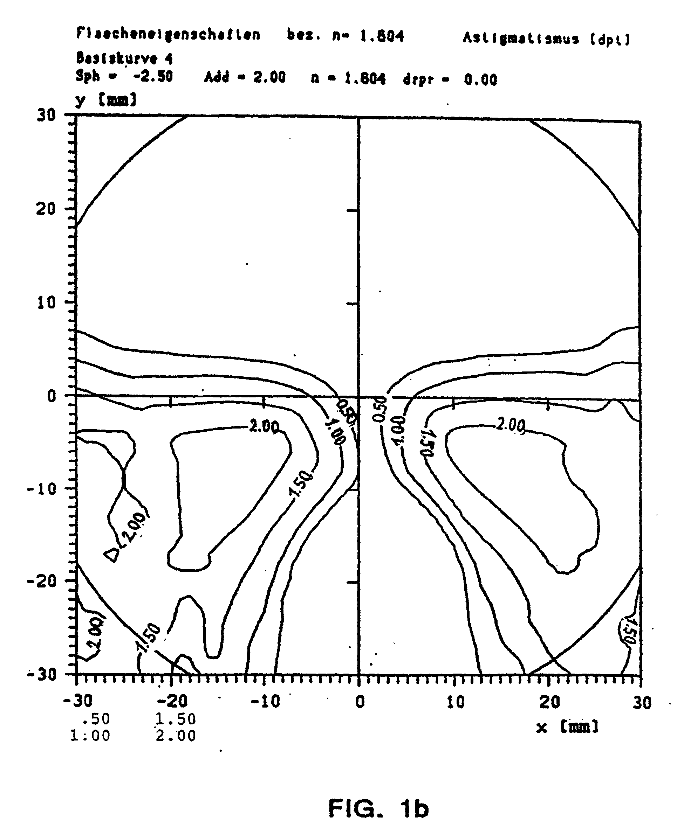

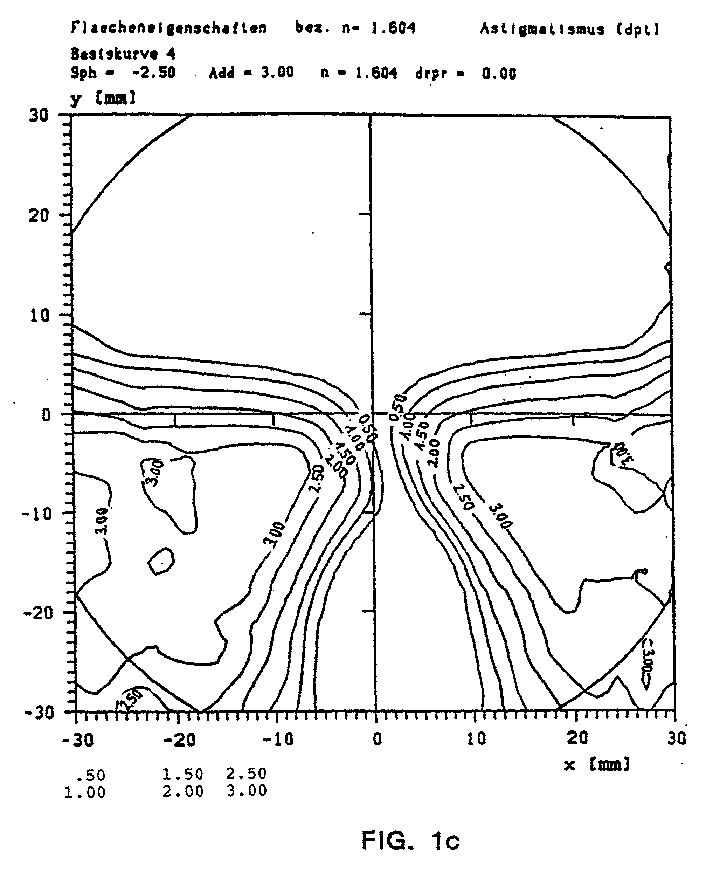

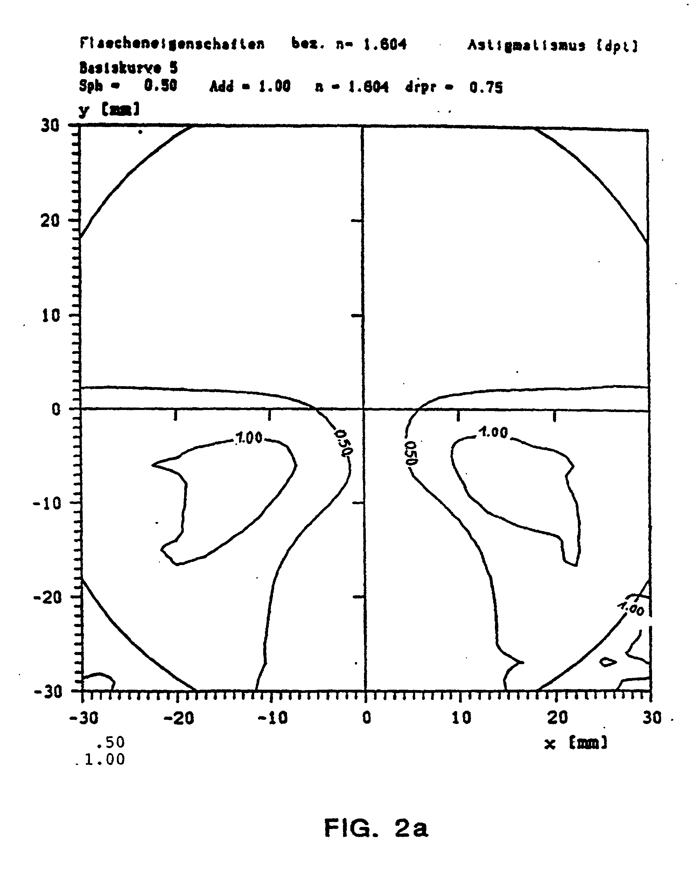

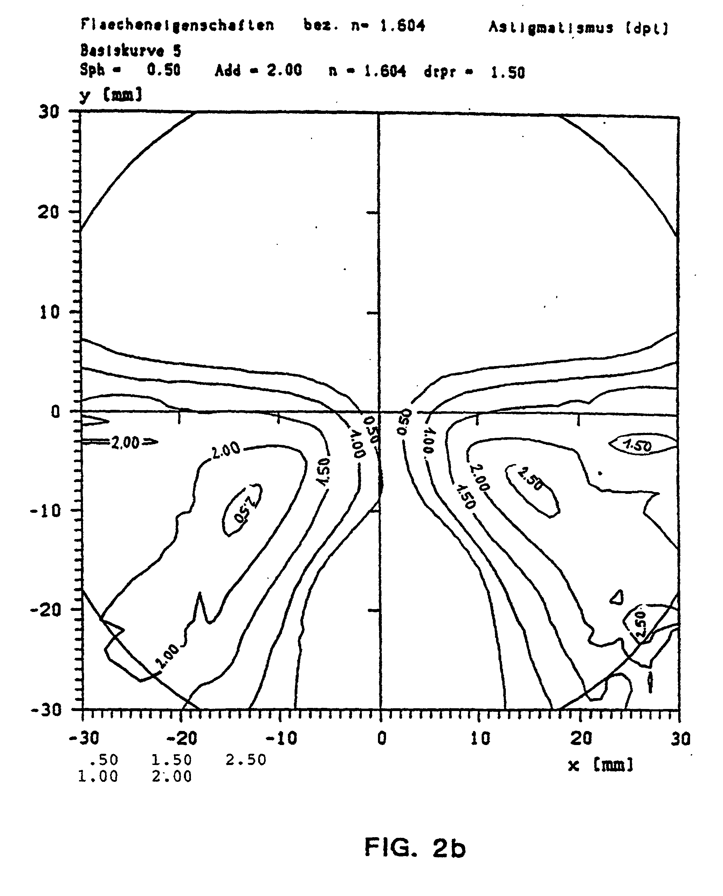

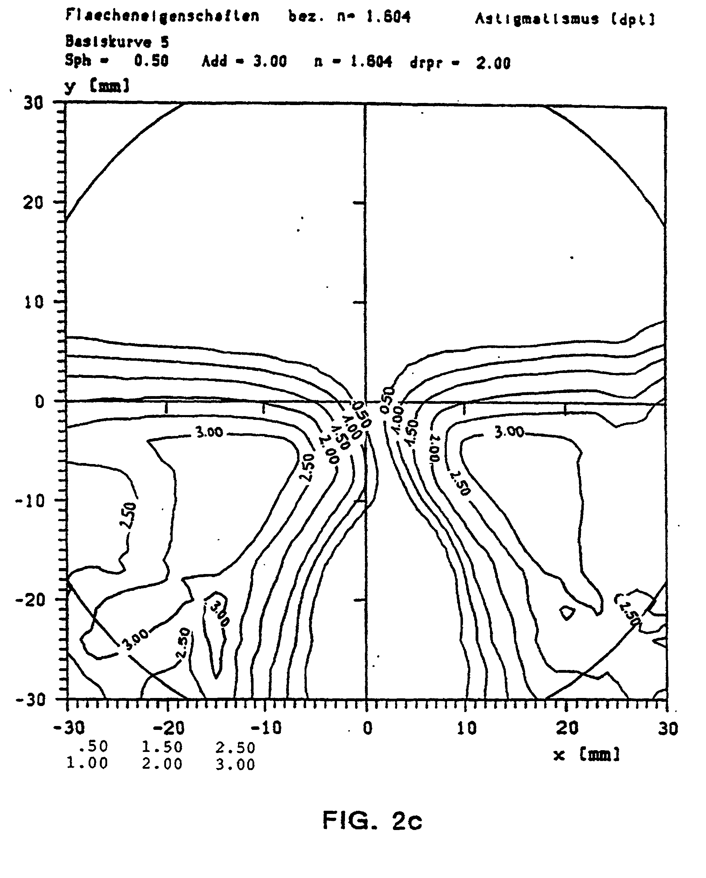

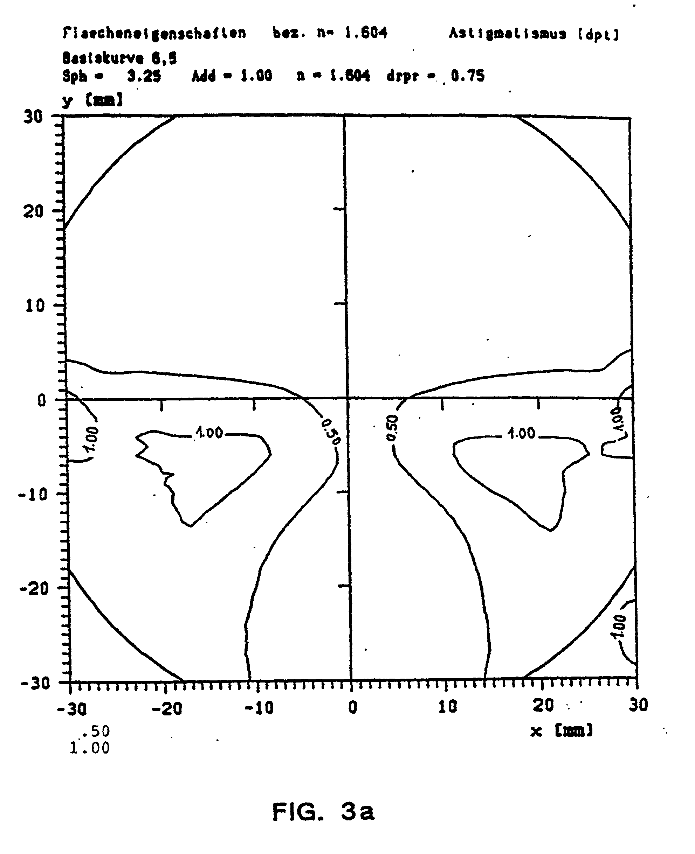

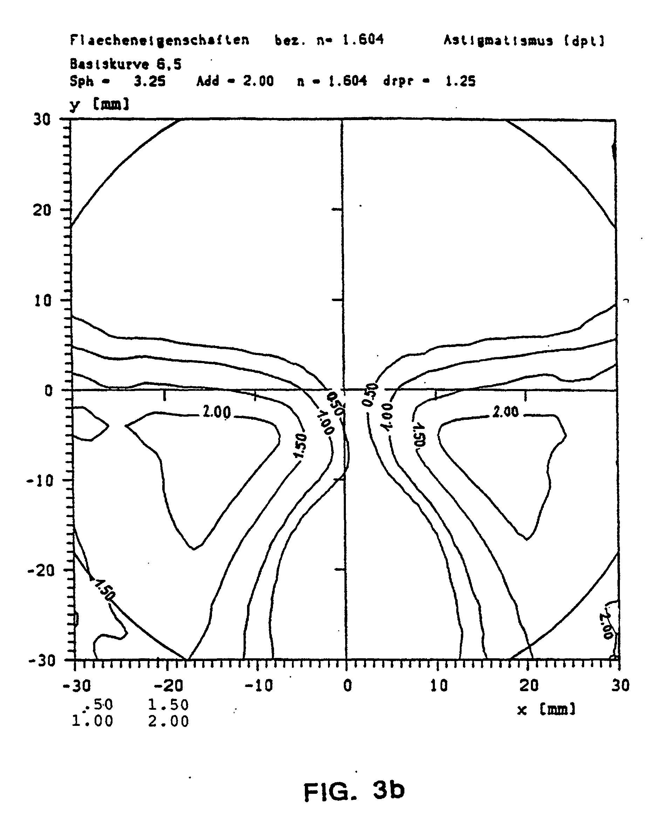

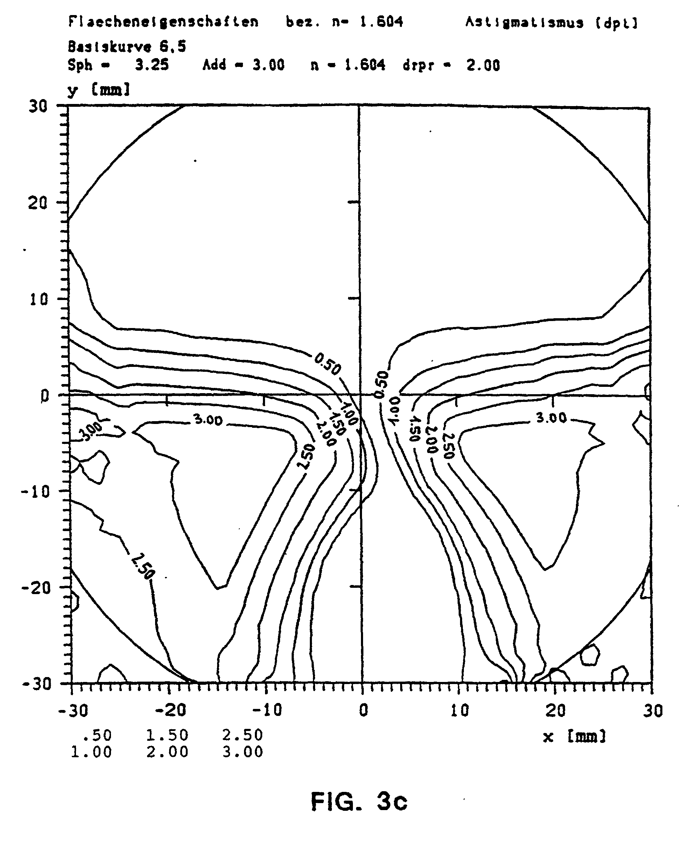

In den Figuren 1 bis 3 ist der Flächenastigmatismus (in dpt) für erfindungsgemäß gestaltete progressive Vorderflächen als Funktion der Koordinaten x und y (in mm) für ein Feld von 60*60 mm dargestellt, wobei zusätzlich die Begrenzungen eines typischen "rohrunden" Brillenglases eingetragen sind.

Bezüglich der Definition des Flächenastigmatismus wird beispielsweise auf die US-PS 2 878 721 verwiesen.

Die in den einzelnen Figuren dargestellten Flächen haben jeweils folgende "Grunddaten".

|        | BK  | n     | Teilf. | a    | b    | c    |
|--------|-----|-------|--------|------|------|------|
| Fig. 1 | 4   | 1,604 | Add    | 1dpt | 2dpt | 3dpt |
| Fig. 2 | 5   | 1,604 |        | 1    | 2    | 3    |
| Fig. 3 | 6,5 | 1,604 |        | 1    | 2    | 3    |

Unter BK (in dpt) wird der Flächenbrechwert verstanden, den die Fläche in dem sog. Fernbezugspunkt mit den Koordinaten x=0mm, y=8mm hat. Im Fernbezugspunkt hat das Brillenglas eine zum Sehen in die Ferne für den jeweiligen Brillenträger geeignete Wirkung. Typische sphärische Wirkungen der dargestellten Brillengläser im Fernbezugspunkt können sein, wobei die augenseitige Fläche eine sphärische Fläche ist:

| Fig. 1 | - 2,5 dpt  |
|--------|------------|
| Fig. 2 | 0,5 dpt    |
| Fig. 3 | 3,25 dpt.  |

Mit Add (in dpt) wird die Addition bezeichnet, also die Zunahme des Flächenbrechwerts vom Fernbezugspunkt zum sog. Nahbezugspunkt, in dem das Brillenglas eine zum Sehen in die Nähe geeignete Wirkung hat. Wie der vorstehenden Übersicht zu entnehmen ist, betragen die Additionen 1 dpt, 2 dpt und 3 dpt.

In den Figuren 1a bis 3c sind sogenannte Isoastigmatismus-Linien für Flächenastigmatismus-Werte von 0,5 dpt, 1,0 dpt, 1,5 dpt, 2,0 dpt, 2,5 dpt und 3,0 dpt dargestellt. Wenn in einzelnen Figuren Isoastigmatismus-Linien für bestimmte Werte fehlen, so bedeutet dies, daß die jeweilige progressive Fläche keine Bereiche aufweist, in denen der Flächenastigmatismus diese Werte erreicht. Deutlich ist in Figuren die Abhängigkeit der Höhe y der Linie, auf der der Flächenastigmatismus 0,5 dpt beträgt, in einem Abstand von 25 mm von der Hauptlinie von dem Flächenbrechwert im Fernbezugspunkt und von der Addition zu erkennen.

Ferner zeigen die Figuren 1a bis 3c, daß die minimale Breite dx des Nahteils insbesondere in Höhe des in üblicher Weise definierten Nahbezugspunktes (in erster Linie) nur eine Funktion der Addition Add ist. Die Abhängigkeit von der Basiskurve, d.h. vom Flächenbrechwert im Fernbezugspunkt ist dagegen sehr viel geringer !

Im übrigen wird zur Offenbarung aller nicht näher erläuterten Einzelheiten ausdrücklich auf die Figuren verwiesen.

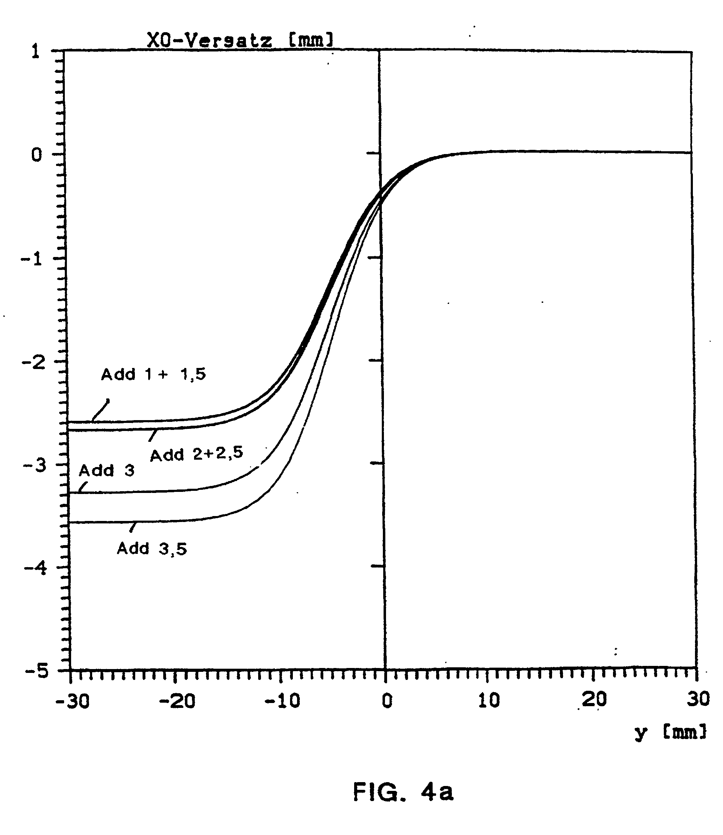

Fig. 4a zeigt die Projektion der Hauptlinie in die x,y-Ebene für Hauptlinien mit unterschiedlicher Addition, nämlich 1,0 dpt, 1,5 dpt, 2,0 dpt, 2,5 dpt, 3,0 dpt und 3,5 dpt und einem Flächenbrechwert 5dpt im Fernbezugspunkt. Diese Figur erläutert die erfindungsgemäß gewählte Abhängigkeit des sog. $x_0$-Versatzes der Hauptlinie, also des Versatzes, durch den die Hauptlinie dem "Sehstrahl" bei einer Blicksenkung folgt. Genauer gesagt folgt die Hauptlinie dem Durchstoßpunkt des Sehstrahls durch die progressive Fläche bei einer Blicksenkung.

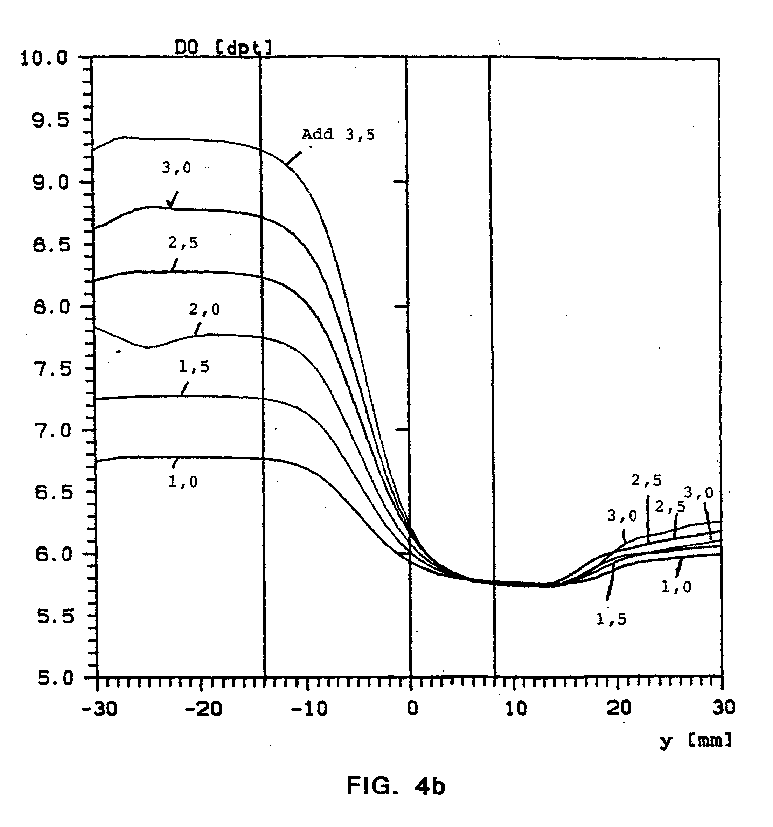

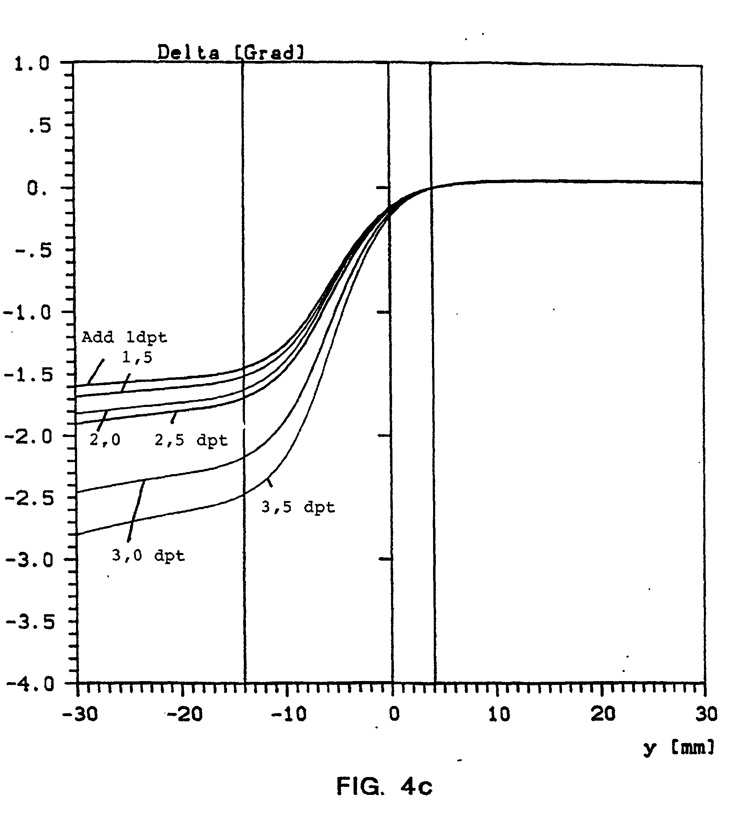

Die Figuren 4b und 4c zeigen den mittleren Flächenbrechwert bzw. den Winkel $\delta_0(y)$, d.h. die Steigung der Horizontalschnitte an diesen Hauptlinien für die in Fig. 4a dargestellten Hauptlinien. Auch bezüglich der Fig. 4 wird hinsichtlich der Offenbarung aller nicht näher erläuterten Einzelheiten ausdrücklich auf diese Figur verwiesen.

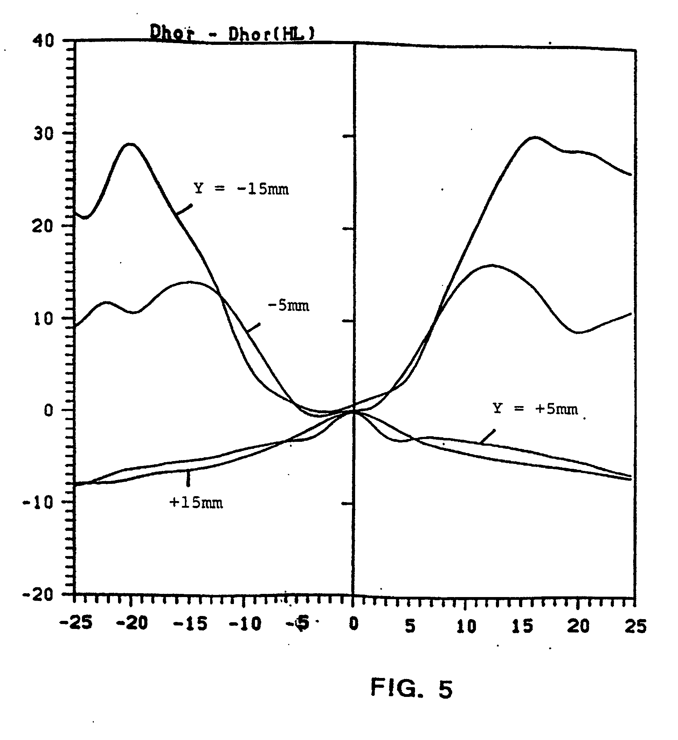

Fig. 5 zeigt die Horizontalradien-Differenz für verschiedene Werte von y, nämlich y = 15 mm, 5 mm, -5mm und -15mm.

Unter Horizontalradius wird der Radiuswert verstanden, den man durch den Schnitt der progressiven Fläche mit einer Horizontalebene y=const., also bei dem Beispiel y = 15 mm, 5 mm, -5mm und -15mm erhält. Unter Horizontalradien-Differenz wird nun die Differenz des Horizontalradius auf der Hauptlinie im Punkt $x=x_0$, $y=y_0$ und dem Horizontalradius in einem Punkt $x=x_1$, $y=y_0$ der progressiven Fläche verstanden. Der jeweilige Punkt $x_0$ ist Fig. 4a zu entnehmen.

Bei den erfindungsgemäßen Flächen ändert sich in jedem Falle im unteren Bereich des Fernteils, d.h. für y-Werte von 5 bis 10 mm in einem Streifen beidseits der Hauptlinie mit einer einseitigen Ausdehnung von etwa 3 bis 8 mm die Horizontalradien-Differenz mit einem vergleichsweise großen Gradienten, während die Änderung außerhalb dieses Streifens einen wesentlich kleineren Gradienten aufweist. In der Progressionszone (y = - 5mm) und im Nahteil (y = -15 mm) ist dagegen in diesem Streifen beidseits der Hauptlinie der Gradient der Horizontalradien-Differenz vergleichsweise gering. Dafür ändert sich in diesem Bereich die Horizontalradien-Differenz außerhalb dieses Streifens mit einem sehr großen Gradienten und erreicht ein Maximum bei etwa x = 12 bis 20 mm. Nach "Durchlaufen" des Maximums durchläuft die Horizontalradien-Differenz ein ausgeprägtes Minimum, das mit sinkenden y-Werten "nach außen" wandert.

Durch diesen Verlauf der Horizontalradien-Differenz erreicht man, daß die Linien gleichen Flächenbrechwerts horizontal in die Hauptlinie einmünden.

Einen ähnlichen Verlauf der Horizontalradien-Differenz erhält man auch bei anderen Additionen und Basiskurven, so daß auf eine Darstellung für weitere Additionen und Basiskurven verzichtet wird.

Die vorstehenden Informationen ermöglichen es einem Fachmann ohne weiteres, erfindungsgemäße Flächen in einer für eine Fertigung geeigneten Form, also beispielsweise als Pfeilhöhen zu berechnen:

Zur eindeutigen Beschreibung einer progressiven Fläche genügt eine Funktion der unabhängigen Variablen x und y, also beispielsweise der Flächenastigmatismus Ast(x,y) und die Kenntnis eines Streifens 1. Ordnung entlang der Hauptlinie. Dieser Streifen 1. Ordnung ist durch drei eindimensionale Funktionen eindeutig bestimmt. Diese Funktionen können beispielsweise die Projektion der Hauptlinie in die x,y-Ebene ($x_0(y)$-Versatz), die Projektion der Hauptlinie in die y,z-Ebene ($z_0(y)$-Versatz), der mittlere Brechwert H längs der Hauptlinie, sowie der Winkel $\delta_0(y)$, d.h. die Steigung der Horizontalschnitte an der Hauptlinie sein.

Bestimmen kann man nun die Fläche beispielsweise mittels einer Zielfunktion Z

$$\text{Minimum } Z = \int [(A(x,y) - A_v(x,y))^2 + (H(x_0(y),y) - H_v(y))^2 +$$

$$((x_0(y),y) - \delta_0(y))^2 \delta z/\delta x + z'_0(0)^2 + z_0(0))^2 ]\delta x \delta y.$$

Hierbei bedeutet der Index v, daß es sich um einen Vorgabewert handelt. Ferner müssen die Startwerte

$z_0=z'_0=0$ für y=0 mit $z'_0=\delta z/\delta y$ gegeben sein. $H_v$ ist der mittlere Flächenbrechwert auf der Hauptlinie.

Wie bereits erwähnt, kann bei der erfindungsgemäßen Serie progressiver Brillengläser die augenseitige Fläche bei sphärischer Verordnung eine asphärische Fläche und bei torischer Verordnung eine atorischen Fläche sein, wobei die Basiskurve der progressiven Fläche 1 dpt bis 1,5 dpt "flacher" als bei sphärischer bzw. torischer augenseitiger Fläche gewählt ist.

Die durch die "flachere Basiskurve" entstehenden "Bildfehler" in Gebrauchsstellung werden durch die asphärische bzw. atorische Fläche korrigiert.

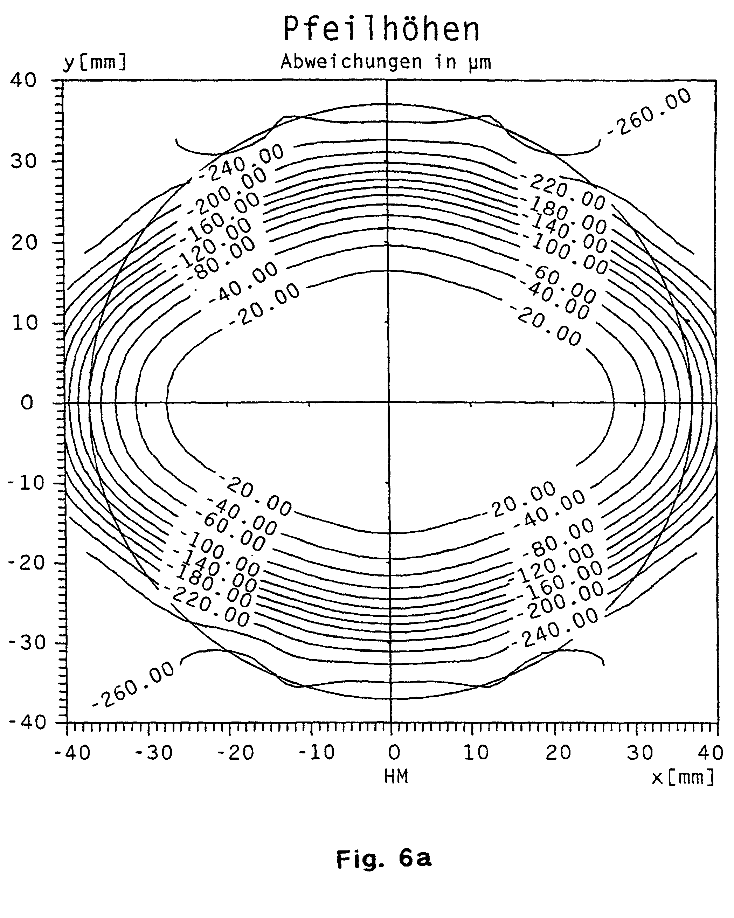

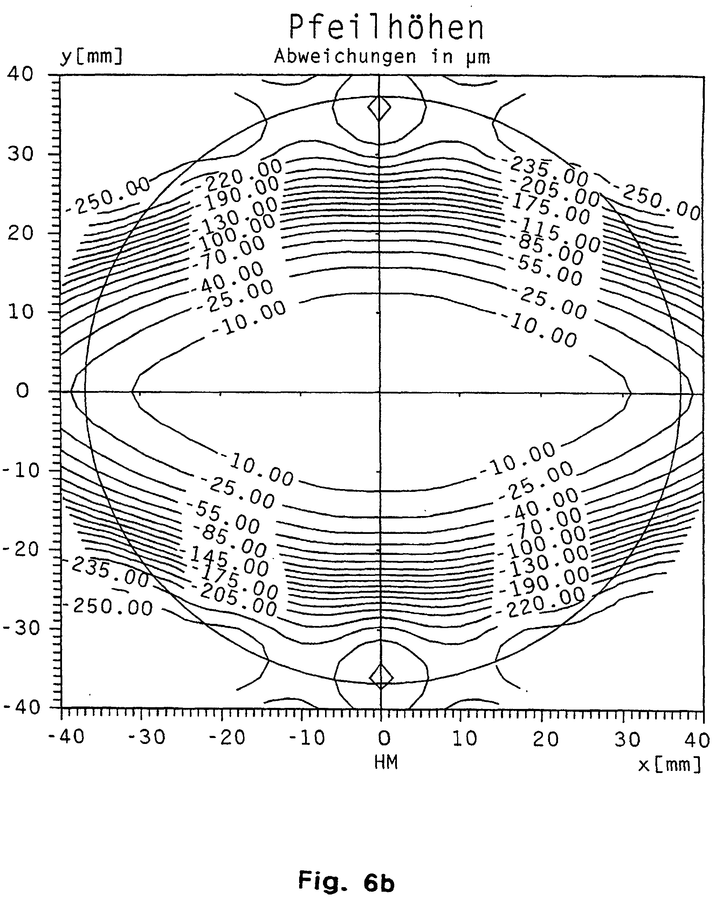

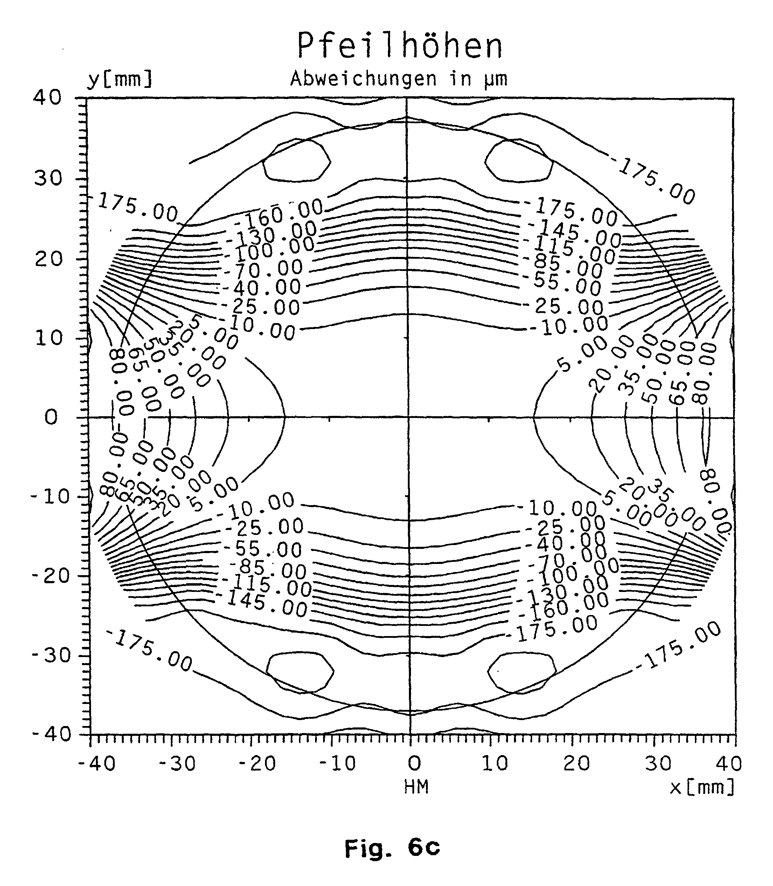

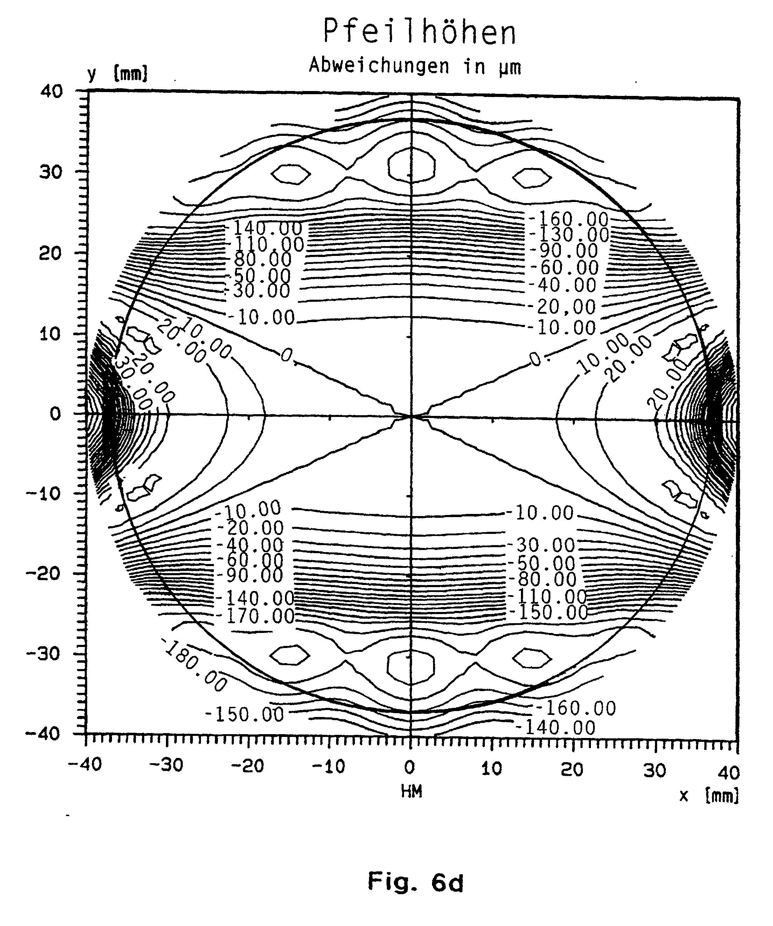

Fig. 6 zeigt die Abweichungen in μm einer atorischen Fläche, die für die genannte Korrektur der Bildfehler benötigt wird, von einer sphärischen Fläche, die sich im Scheitelpunkt an die atorische Fläche "anschmiegt", die also kreisförmige Hauptschnitte mit einem Radius aufweist, der dem Scheitelradius der asphärischen Hauptschnitte der atorischen Fläche entspricht.

Sämtliche dargestellten atorischen Flächen sind für Gläser mit einem Brechungsindex von 1,604 berechntet.

|  | spärische Wirkung | Minuszylinder | Achslage |
|---|---|---|---|
| Fig. 6a | -4,0 dpt | +2,25 dpt | 30° |
| Fig. 6b | -4,0 | +2,25 | 80° |
| Fig. 6c | -4,0 | +2,25 | 110° |
| Fig. 6d | -4,0 | +2,25 | 150° |

Die Angabe beziehen sich jeweils auf die Hauptschnitte der atorischen Flächen. Die Abhängigkeit von der Achslage ist dabei nicht so signifikant, wie die erfindungsgemäß aufgefundene Abhängigkeit von der sphärischen Wirkung (Wirkung des "stärkeren" Hauptschnitts) und dem Minuszylinder (Wirkungsdifferenz zwischen dem stärkeren und dem schwächeren Hauptschnitt).

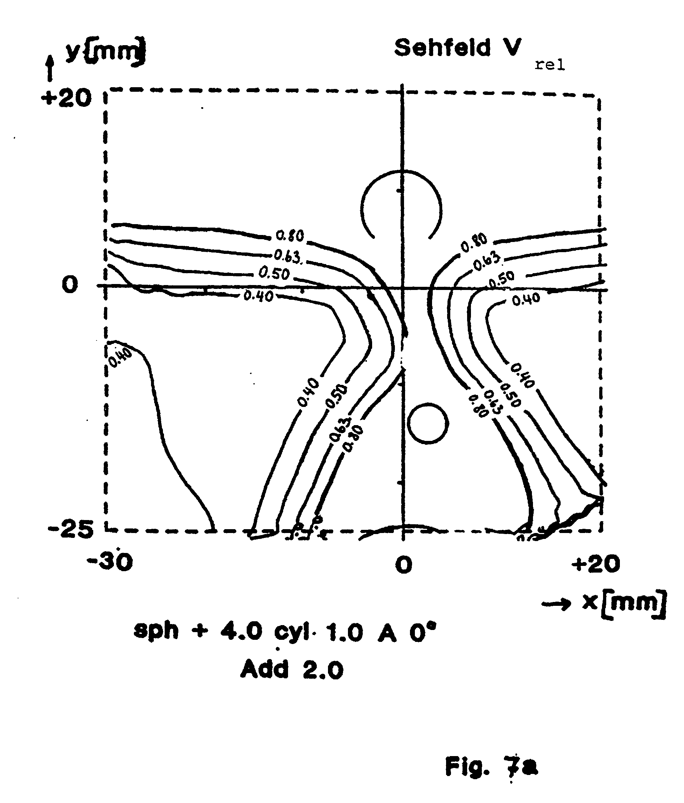

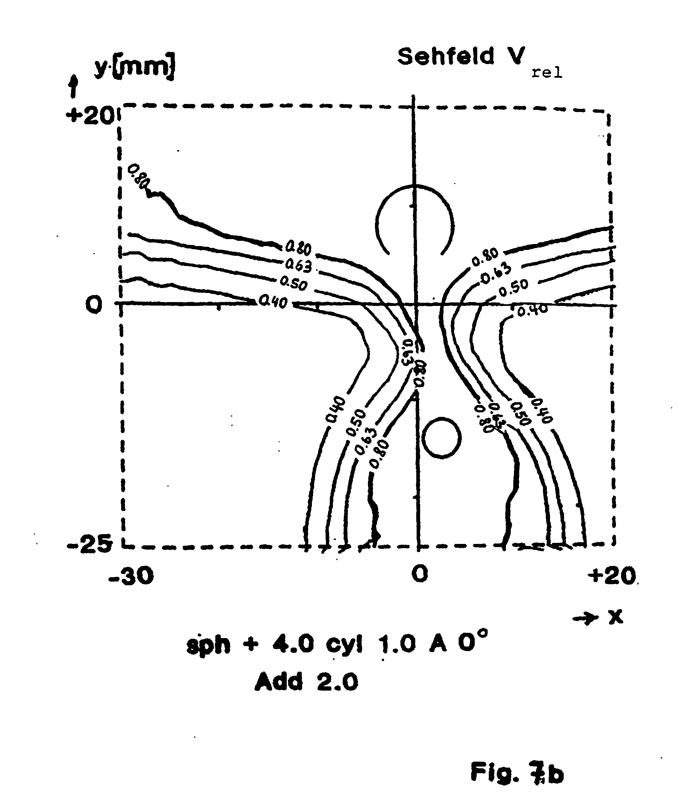

Die Figuren 7a und 7b zeigen die Iso-Visus-Linien für ein progressives Brillenglas mit atorischer augenseitiger Fläche (7a) und mit torischer augenseitiger Fläche (7b).

Bei beiden Gläsern ist die Fernteilwirkung 4 dpt, die Addition 2 dpt und der Zylinder 1 dpt. Die Achslage beträgt 0°. Die Basiskurve des in Fig. 1a dargestellten Glases ist jedoch um 1,5 dpt "flacher". Deutlich ist zu sehen, daß bei gleicher optischer Leistung das progressive Brillenglas mit atorischer augenseitiger Fläche kosmetisch günstiger ist.

Zusammenfassend ist zu sagen, daß die Pfeilhöhendifferenz für jeden Hauptschnitt und jede Kombination von sphärischer Wirkung und "Zylinder" durch eine Funktion gemäß Anspruch 15 beschrieben wird. Die Parameter a und b hängen wiederum linear vom Zylinderwert ab, wobei der die Steigung angebende Koeffizient linear von der sphärischen Wirkung abhängt. Der den Schnittpunkt der Geraden mit der Ordinate angebende Koeffizient hängt quadratisch von der sphärischen Wirkung ab. Somit kann die Pfeilhöhendifferenz mit 20 Parametern für jeden Hauptschnitt beschrieben werden.

Vorstehend ist die Erfindung anhand von Ausführungsbeispielen ohne Beschränkung des allgemeinen Erfindungsgedankens beschrieben worden, wie der sich aus den Ansprüchen ergibt. Insbesondere ist es möglich, die beschriebenen atorischen Flächen auch mit andersartig aufgebauten progressiven Flächen einzusetzen.

**Patentansprüche**

**1.** Serie progressiver Brillengläser, bei der die einzelnen Brillengläser der Serie einen unterschiedlichen Flächenbrechwert im Fernteil und/oder eine unterschiedliche Zunahme des Flächenbrechwerts vom Fernteil zum Nahteil (i.f. Addition Add) haben, und von denen jedes

- eine Fläche und insbesondere eine Vorderfläche mit kontinuierlich variierendem Flächenbrechwert aufweist, der von dem jeweiligen zum Sehen in die Ferne geeigneten Wert BK [dpt] im Punkt mit den Koordinaten x=0mm, y=8mm im unteren Bereich des Fernteils längs einer gewundenen Linie (Hauptlinie), die in etwa mit der Hauptblicklinie bei Blicksenkung zusammenfällt, auf einen zum Sehen in die Nähe geeigneten Wert im oberen Bereich des Nahteils ansteigt, der um den Wert Add [dpt] der Addition höher als der Flächenbrechwert BK im unteren Bereich des Fernteils ist, und
- eine Fläche und insbesondere eine augenseitige Fläche aufweist, die sphärisch oder asphärisch gestaltet sein kann,

**dadurch gekennzeichnet, daß** für den Versatz $x_0$ der in die x, y-Ebene projizierten Hauptlinie gilt:

$$x_0 = b'' + a'' - a''/(1 + e^{c*(y+d)})$$

und daß für die Koeffizienten gilt:

$2 \leq a'' \leq 4{,}3$ mm
$- 0{,}03 \leq b'' \leq 0$ mm
$- 0{,}4 \leq c \leq -0{,}3$ mm$^{-1}$
$4{,}5 \leq d \leq 5{,}1$ mm

2. Serie nach Anspruch 1,
   **dadurch gekennzeichnet, daß** der Koeffizient a'' eine Funktion der Addition Add und des Fernteil-Flächenbrechwerts BK ist.

3. Serie nach Anspruch 2,
   **dadurch gekennzeichnet, daß** gilt:

$$a'' = \alpha * ADD + \beta * BK + \Gamma$$

wobei für die Koeffizienten gilt:

$$100 \leq \beta \leq 300 \text{ mm}^2$$

Add $\leq 2{,}5$ dpt

$$0 \leq \alpha \leq 200 \text{ mm}^2$$

$$1{,}3 \leq \Gamma \leq 2 \text{ mm}$$

Add $> 2{,}5$ dpt

$$800 \leq \alpha \leq 1100 \text{ mm}^2$$

$$0{,}7 \leq \Gamma \leq 0 \text{ mm}$$

4. Serie nach einem der Ansprüche 1 bis 3,
   **dadurch gekennzeichnet, daß** der Flächenastigmatismus auf der Hauptlinie wenigstens für -18mm < y $\leq$ 12mm Null ist.

5. Serie nach einem der Ansprüche 1 bis 4,
   **dadurch gekennzeichnet, daß** die Linien gleichen Flächenbrechwerts horizontal in die Hauptlinie einmünden.

6. Serie nach einem der Ansprüche 1 bis 5,
   **dadurch gekennzeichnet, daß** die augenseitige Fläche bei sphärischer Verordnung eine asphärische Fläche und bei torischer Verordnung eine atorischen Fläche ist, und daß die Basiskurve der progressiven Fläche 1 dpt bis 1,5 dpt "flacher" als bei sphärischer bzw. torischer augenseitiger Fläche gewählt ist.

7. Serie nach Anspruch 6,
   **dadurch gekennzeichnet, daß** das Design der atorischen Fläche in Abhängigkeit von der Achslage des Zylinders variiert.

8. Serie nach Anspruch 6 oder 7,

**dadurch gekennzeichnet, daß** die atorische Fläche wenigstens einen Hauptschnitt aufweist, der von der Kreisform abweicht.

9. Serie nach Anspruch 8,
   **dadurch gekennzeichnet, daß** die Abweichung dz zwischen der Pfeilhöhe des von der Kreisfrom abweichenden Schnitts und eines Kreises mit einem Radius, der dem Scheitelradius der Asphäre entspricht, gegeben ist durch:

$$dz = a_j * r^2 + b_j * r^4$$

hierbei bedeuten

dz   die Abweichung in µm zwischen Scheitelkreis und Hauptschnitt
r    der Abstand vom Scheitel in mm,

und daß für die Koeffizienten gilt:

$$|a_j| \leq 2 * 10^{-4} \ mm^{-1}$$

$$|b_j| \leq 1 * 10^{-6} \ mm^{-3}$$

wobei der Hauptschnitt mit der geringeren Scheitelkrümmung mit j=1 und der mit der größeren Scheitelkrümmung mit j=2 bezeichnet ist.

10. Serie nach Anspruch 9,
    **dadurch gekennzeichnet, daß** die Koeffizienten $a_j$ und $b_j$ durch folgende Funktionale gegeben sind:

$$a_j = f_{j1}(s,z) = a_{j1}(s) + b_{j1}(s) * zyl$$

$$b_j = f_{j2}(s,z) = a_{j2}(s) + b_{j2}(s) * zyl$$

hierbei bedeuten

s    die sphärische Wirkung im Fernbezugspunkt in Minuszylinderschreibweise
zyl  die zylindrische Wirkung im Fernbezugspunkt in Minuszylinder-Schreibweise, und

daß die Koeffizienten $a_{j2}$ und $b_{j2}$ eine Funktion zweiter Ordnung von s sind.

11. Serie nach Anspruch 10,
    **dadurch gekennzeichnet, daß** für die Koeffizienten $a_{ji}$ und $b_{ji}$ gilt:

$$|a_{j1}| \leq 5 * 10^{-5} \ mm^{-1}$$

$$|b_{j1}| \leq 5 * 10^{-2}$$

$$|a_{j2}| \leq 4 * 10^{-7} \ mm^{-3}$$

$$|b_{j2}| \leq 3 * 10^{-4} \ mm^{-2}$$

12. Serie nach Anspruch 10 oder 11,

**dadurch gekennzeichnet, daß** die Koeffizienten $a_{j2}$ und $b_{j2}$ durch folgende Funktionale gegeben sind:

$$a_{j2} = a_{j21} + b_{j21} * s + c_{j21} * s^2$$

$$b_{j2} = a_{j22} + b_{j22} * s + c_{j22} * s^2$$

**13.** Serie nach Anspruch 12,
**dadurch gekennzeichnet, daß** für die Koeffizienten a, b und c gilt:

$$a_{j21} = 2,35 * 10^{-8} \text{ mm}^{-3} \pm 50\,\%$$

$$b_{j21} = -1,7 * 10^{-5} \text{ mm}^{-2} \pm 50\,\%$$

$$c_{j21} = -8 * 10^{-3} \text{ mm}^{-1} \pm 50\,\%$$

**14.** Serie nach Anspruch 13,
**dadurch gekennzeichnet, daß** für die Koeffizienten der beiden Hauptschnitte gilt:

$$a_{121} = 2,35 * 10^{-8} \text{ mm}^{-3} \pm 50\,\%$$

$$b_{j21} = -1,7 * 10^{-5} \text{ mm}^{-2} \pm 50\,\%$$

$$c_{j21} = -8 * 10^{-3} \text{ mm}^{-1} \pm 50\,\%$$

$$a_{122} = 1,73 * 10^{-5} \text{ mm}^{-2} \pm 50\,\%$$

$$b_{122} = 3,22 * 10^{-2} \text{ mm}^{-1} \pm 50\,\%$$

$$c_{122} = -2,27 \pm 50\,\%$$

$$a_{222} = -2,76 * 10^{-5} \text{ mm}^{-2} \pm 50\,\%$$

$$b_{222} = -1,29 * 10^{-3} \text{ mm}^{-1} \pm 50\,\%$$

$$c_{222} = -0,172 \pm 50\,\%$$

**Claims**

**1.** A series of progressive spectacle lenses, in which the individual spectacle lenses of the series have a different surface power in the distance part and/or a different addition of the surface power from the distance part to the near part (addition Add below), and of which each comprises

- a surface, especially a front surface, with continuously varying surface power, which increases from the respective value BK [D] adapted for distance vision at the point with the coordinates x=0mm, y=8mm in the lower region of the distance part along a sinuous line (principal line), which approximately coincides with the principal line of sight when lowering the sight, to a value adapted for near vision in the upper region of the near part, which value is higher than the surface power BK in the lower region of the distance part by the value Add[D] of the addition and

- has a surface and in particular a surface on the eye side which can be spherical or aspherical, **characterized in that** the following applies for the offset $x_0$ in the x, y plane of the projected principal line:

$$x_0 = b" + a" - a"/(1 + e^{c*(y+d)})$$

with the following applying for the coefficients:

$2 \leq a" \leq 4.3$ mm
$-0.3 \leq b" \leq 0$ mm
$- 0.4 \leq c \leq -0.3$ mm$^{-1}$
$4.5 \leq d \leq 5.1$ mm.

2. A series according to claim 1, **characterized in that** the coefficient a" is a function of the addition Add and the distance part surface power BK.

3. A series according to claim 2, **characterized in that** the following applies:

$$a" = \alpha * ADD + \beta * BK + \Gamma$$

wherein there applies for the coefficients:

$$100 \leq \beta \leq 300 \text{ mm}^2$$

Add $\leq$ 2.5 D

$$0 \leq \alpha \leq 200 \text{ mm}^2$$

$$1.3 \leq \Gamma \leq 2 \text{ mm}$$

Add > 2.5 D

$$800 \leq \alpha \leq 1100 \text{ mm}^2$$

$$0.7 \leq \Gamma \leq 0 \text{ mm.}$$

4. A series according to any of claims 1 to 3, **characterized in that** the surface astigmatism on the principal line is zero at least for -18 mm < y $\leq$ 12 mm.

5. A series according to any of claims 1 to 4, **characterized in that** the lines of equal surface power meet the principal line horizontally.

6. A series according to any of claims 1 to 5, **characterized in that** the surface on the eye side is an aspherical surface for a spherical prescription and is an atoric surface for a toric prescription, and **in that** the base curve of the progressive surface is chosen to be 1 D to 1.5 D "flatter" than with a spheric or toric eye side surface.

7. A series according to claim 6, **characterized in that** the design of the atoric surface varies in dependence on the axial position of the cylinder.

**8.** A series according to claim 6 or 7, **characterized in that** the atoric surface has at least one main section which deviates from circular form.

**9.** A series according to claim 8, **characterized in that** the deviation dz between the sagitta of the section deviating from the circular form and a circle with a radius which corresponds to the vertex radius of the non-sphere is given by:

$$dz = a_j * r^2 + b_j * r^4$$

wherein

dz    signifies the deviation in µm between the vertex circle and the main section

r      signifies the distance from the vertex in mm

and **in that** there applies for the coefficients:

$$|a_j| \leq 2 * 10^{-4} \text{ mm}^{-1}$$

$$|b_j| \leq 1 * 10^{-6} \text{ mm}^{-3}$$

wherein the main section with the smaller vertex curvature is denoted by j=1 and that with the greater vertex curvature by j=2.

**10.** A series according to claim 9, **characterized in that** the coefficients $a_j$ and $b_j$ are given by the following functions:

$$a_j = f_{j1}(s, z) = a_{j1}(s) + b_{j1}(s) * cyl$$

$$b_j = f_{j2}(s, z) = a_{j2}(s) + b_{j2}(s) * cyl$$

wherein

s      is the spherical power at the far reference point in negative cylinder notation

cyl    is the cylinder power at the far reference point in negative cylinder notation, and

**in that** the coefficients $a_{j2}$ and $b_{j2}$ are a second order function of s.

**11.** A series according to claim 10, **characterized in that** for the coefficients $a_{j1}$ and $b_{j1}$ there applies:

$$|a_{j1}| \leq 5 * 10^{-5} \text{ mm}^{-1}$$

$$|b_{j1}| \leq 5 * 10^{-2}$$

$$|a_{j2}| \leq 4 * 10^{-7} \text{ mm}^{-3}$$

$$|b_{j2}| \leq 3 * 10^{-4} \text{ mm}^{-2}.$$

**12.** A series according to claim 10 or 11, **characterized in that** the coefficients $a_{j2}$ and $b_{j2}$ are given by the following functions:

$$a_{j2} = a_{j21} + b_{j21} * s + c_{j21} * s^2$$

$$b_{j2} = a_{j22} + b_{j22} * s + c_{j22} * s^2.$$

**13.** A series according to claim 12, **characterized in that** the following applies for the coefficients a, b and c:

$$a_{j21} = 2.35 * 10^{-8} \text{ mm}^{-3} \pm 50\%$$

$$b_{j21} = -1.7 * 10^{-5} \text{ mm}^{-2} \pm 50\%$$

$$c_{j21} = -8 * 10^{-3} \text{ mm}^{-1} \pm 50\%.$$

**14.** A series according to claim 13, **characterized in that** the following applies for the coefficients of the two main sections:

$$a_{121} = 2.35 * 10^{-8} \text{ mm}^{-3} \pm 50\%$$

$$b_{j21} = -1.7 * 10^{-5} \text{ mm}^{-2} \pm 50\%$$

$$c_{j21} = -8 * 10^{-3} \text{ mm}^{-1} \pm 50\%$$

$$a_{122} = 1.73 * 10^{-5} \text{ mm}^{-2} \pm 50\%$$

$$b_{122} = 3.22 * 10^{-2} \text{ mm}^{-1} \pm 50\%$$

$$c_{122} = -2.27 \pm 50\%$$

$$a_{222} = -2.76 * 10^{-5} \text{ mm}^{-2} \pm 50\%$$

$$b_{222} = -1.29 * 10^{-3} \text{ mm}^{-1} \pm 50\%$$

$$c_{222} = -0.172 \pm 50\%.$$

**Revendications**

**1.** Série de verres de lunettes progressifs, dans laquelle les verres de lunettes individuels de la série présentent une puissance optique différente dans la partie destinée à la vision de loin et/ou une augmentation différente de la puissance optique de la partie destinée à la vision de loin à la partie destinée à la vision de près (ci-après Addition Add), et dont chacun présente

- une surface, et en particulier une face avant avec une puissance optique variable en continu qui augmente de la valeur respective adaptée pour la vision de loin BK [dpt] au point ayant les coordonnées x = 0 mm, y = 8 mm dans la zone inférieure de la partie destinée à la vision de loin, le long d'une ligne sinueuse (ligne principale) qui coïncide approximativement avec la ligne de vision principale quand on baisse le regard, à une valeur adaptée pour la vision de près dans la zone supérieure de la partie destinée à la vision de près, qui est supérieure de la valeur Add [dpt] de l'addition à la puissance optique BK dans la zone inférieure de la partie destinée à la vision de loin, et

- une surface, et en particulier une face côté oeil qui peut être de forme sphérique ou asphérique,

**caractérisée en ce que** pour le décalage $x_0$ de la ligne principale projetée sur le plan x, y :

$$x_0 = b'' + a'' - a'' / (1 + e^{c*(y+d)})$$

s'applique, et **en ce que** pour les coefficients :

$2 \le a'' \le 4,3 mm$
$- 0,03 \le b'' \le 0$ mm
$- 0,4 \le c \le -0,3$ mm$^{-1}$
$4,5 \le d \le 5,1$ mm

s'applique.

2. Série selon la revendication 1, **caractérisée en ce que** le coefficient a'' est une fonction de l'addition Add et de la puissance optique BK de la partie destinée à la vision de loin.

3. Série selon la revendication 2, **caractérisée en ce que** :

$$a'' = \alpha * ADD + \beta * BK + \Gamma$$

s'applique,

$$100 \le \beta \le 300 \text{ mm}^2$$

Add $\le 2,5$ dpt

$$0 \le \alpha \le 200 \text{ mm}^2$$

$$1,3 \le \Gamma \le 2 \text{ mm}$$

Add $> 2,5$ dpt

$$800 \le \alpha \le 1100 \text{ mm}^2$$

$$0,7 \le \Gamma \le 0 \text{ mm}$$

s'appliquant pour les coefficients.

4. Série selon l'une quelconque des revendications 1 à 3, **caractérisée en ce que** l'astigmatisme de surface sur la ligne principale est zéro au moins pour -18 mm < y $\le$ 12 mm.

5. Série selon l'une quelconque des revendications 1 à 4, **caractérisée en ce que** les lignes de même puissance optique débouchent horizontalement sur la ligne principale.

6. Série selon l'une quelconque des revendications 1 à 5, **caractérisée en ce que** la face côté oeil est une surface asphérique pour une prescription sphérique et une surface atorique pour une prescription torique, et **en ce que** la courbe de base de la surface progressive est choisie de 1 dpt à 1,5 dpt "plus plate" que pour un côté oeil sphérique ou torique.

7. Série selon la revendication 6, **caractérisée en ce que** la forme de la surface atorique varie en fonction de la position axiale du cylindre.

8. Série selon la revendication 6 ou 7, **caractérisée en ce que** la surface atorique présente au moins une section principale qui s'écarte de la forme circulaire.

9. Série selon la revendication 8, **caractérisée en ce que** l'écart dz entre la hauteur de flèche de la section s'écartant de la forme circulaire et d'un cercle ayant un rayon qui correspond au rayon de sommet de l'asphère est donné par :

$$dz = a_j * r^2 + b_j * r^4$$

où

dz     l'écart en $\mu$m entre le cercle de sommet et la section principale
r     la distance depuis le sommet en mm, et **en ce que** :

$$|a_j| \leq 2 * 10^{-4} \ mm^{-1}$$

$$|b_j| \leq 1 * 10^{-6} \ mm^{-3}$$

s'applique aux coefficients, la section principale ayant la courbure de sommet inférieure étant désignée par j = 1 et la section ayant la courbure de sommet supérieure étant désignée par j = 2.

10. Série selon la revendication 9, **caractérisée en ce que** les coefficients $a_j$ et $b_j$ sont donnés par la fonctionnelle suivante :

$$a_j = f_{j1}(s,z) = a_{j1}(s) + b_{j1}(s) * zyl$$

$$b_j = f_{j2}(s,z) = a_{j2}(s) + b_{j2}(s) * zyl$$

où

s     l'effet sphérique au point de référence de loin en notation de cylindre négatif
zyl     l'effet cylindrique au point de référence de loin en notation de cylindre négatif, et

**en ce que** les coefficients $a_{j2}$ et $b_{j2}$ sont une fonction de deuxième ordre de s.

11. Série selon la revendication 10, **caractérisée en ce que** pour les coefficients $a_{j1}$ et $b_{j1}$ :

$$|a_{j1}| \leq 5 * 10^{-5} \ mm^{-1}$$

$$|b_{j1}| \leq 5 * 10^{-2}$$

$$|a_{j2}| \leq 4 * 10^{-7} \text{ mm}^{-3}$$

$$|b_{j2}| \leq 3 * 10^{-4} \text{ mm}^{-2}$$

s'applique.

**12.** Série selon la revendication 10 ou 11, **caractérisée en ce que** les coefficients $a_{j2}$ et $b_{j2}$ sont donnés par la fonctionnelle suivante :

$$a_{j2} = a_{j21} + b_{j21} * s + c_{j21} * s^2$$

$$b_{j2} = a_{j22} + b_{j22} * s + c_{j22} * s^2$$

**13.** Série selon la revendication 12, **caractérisée en ce que** pour les coefficients a, b et c :

$$a_{j21} = 2{,}35 * 10^{-8} \text{ mm}^{-3} \pm 50\ \%$$

$$b_{j21} = -1{,}7 * 10^{-5} \text{ mm}^{-2} \pm 50\ \%$$

$$c_{j21} = -8 * 10^{-3} \text{ mm}^{-1} \pm 50\ \%$$

s'applique.

**14.** Série selon la revendication 13, **caractérisée en ce que** pour les coefficients des deux sections principales :

$$a_{j21} = 2{,}35 * 10^{-8} \text{ mm}^{-3} \pm 50\ \%$$

$$b_{j21} = -1{,}7 * 10^{-5} \text{ mm}^{-2} \pm 50\ \%$$

$$c_{j21} = -8 * 10^{-3} \text{ mm}^{-1} \pm 50\ \%$$

$$a_{122} = 1{,}73 * 10^{-5} \text{ mm}^{-2} \pm 50\ \%$$

$$b_{122} = -3{,}22 * 10^{-2} \text{ mm}^{-1} \pm 50\ \%$$

$$c_{122} = -2{,}27 \pm 50\ \%$$

$$a_{222} = -2{,}76 * 10^{-5} \text{ mm}^{-2} \pm 50\ \%$$

$$b_{222} = -1{,}29 * 10^{-3} \text{ mm}^{-1} \pm 50\ \%$$

$$c_{222} = -0{,}172 \pm 50\ \%$$

s'applique.

**FIG. 1a**

FIG. 1b

Flaechenelgenschaften   bez. n= 1.604      Astigmatismus [dpt]
Basiskurve 4
Sph = -2.50   Add = 3.00   n = 1.604  drpr =  0.00

FIG. 1c

FIG. 2a

FIG. 2b

Flaecheneigenschaften   bez. n= 1.604      Astigmatismus [dpt]

Baslskurve 5
Sph =   0.50     Add = 3.00    n = 1.604   drpr =   2.00

.50     1.50     2.50
1.00     2.00     3.00

## FIG. 2c

FIG. 3a

Flaecheneigenschaften   bez. n= 1.604     Astigmatismus [dpt]
Basiskurve 6,5
Sph = 3.25    Add = 2.00    n = 1.604   drpr = 1.25

FIG. 3b

FIG. 3c

FIG. 4a

FIG. 4b

FIG. 4c

FIG. 5

Fig. 6a

**Fig. 6b**

Fig. 6c

# Pfeilhöhen

### Abweichungen in µm

**Fig. 6d**

sph + 4.0 cyl 1.0 A 0°
Add 2.0

Fig. 7a

Fig. 7b